(19)

Europäisches
Patentamt
European
Patent Office
Office européen
des brevets

(11) **EP 3 115 939 A1**

(12) **EUROPEAN PATENT APPLICATION**

(43) Date of publication:
**11.01.2017 Bulletin 2017/02**

(51) Int Cl.:
***G06N 7/00*** (2006.01)

(21) Application number: **16172168.3**

(22) Date of filing: **31.05.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **California Institute of Technology Pasadena, CA 91125 (US)**<br><br>(72) Inventors:<br> • **ABU-MOSTAFA, Yaser**<br>  **Pasadena, CA 91125 (US)**<br> • **GONZALEZ, Carlos**<br>  **Pasadena, CA 91125 (US)** |
| (30) Priority: **07.07.2015 US 201514793328** | (74) Representative: **Dennemeyer & Associates S.A.**<br>**Postfach 70 04 25**<br>**81304 München (DE)** |

(54) **ALTERNATIVE TRAINING DISTRIBUTION BASED ON DENSITY MODIFICATION**

(57)    Technologies are generally described for methods and systems in a machine learning environment. In an example, a method may include receiving training data and test data. The method may also include determining a set of out of sample errors based on the training data and test data. The method may also include determining a set of gradient values based on the out of sample errors. Each gradient value may relate to a first magnitude and to a second magnitude. The first magnitude may be associated with the set of out of sample errors. The second magnitude may be associated with out of sample errors of a portion of the training data excluding a particular point of the test data. The method may also include transforming the set of gradient values into modified density data. The method may also include generating alternative training data based on the modified density data.

Fig. 4

**Description**

**CROSS-REFERENCE TO RELATED APPLICATIONS**

This application is related to U.S. patent application serial number 14/451,859 entitled "Weight Benefit Evaluator for Training Data", U.S. patent application serial number 14/451,870 entitled "Generation of Weights in Machine Learning", U.S. patent application serial number 14/451,899 entitled "Weight Generation in Machine Learning", and U.S. patent application serial number 14/451,935 entitled "Alternative Training Distribution Data in Machine Learning".

**BACKGROUND**

Unless otherwise indicated herein, the materials described in this section are not prior art to the claims in this application and are not admitted to be prior art by inclusion in this section.

In machine learning environments, training data including training inputs and training labels may be used to determine a learned function. The learned function may be effective to indicate a relationship between the training inputs and training labels. The learned function may be deployed in a machine learning system. The machine learning system may receive test inputs and may apply the learned function to the test inputs to produce test labels.

**SUMMARY**

In some examples, methods in a machine learning environment are generally described. The methods may include receiving training data, where the training data comprises training inputs and training labels. The methods may also include receiving test data, where the test data may correspond to a set of points. The methods may also include determining a set of out of sample errors based on the training data and test data. The methods may also include determining a set of gradient values based on the set of out of sample errors. The set of gradient values may correspond to the set of points in the test data. Each respective gradient value may correspond to a particular point in the test data and may relate to a first magnitude and to a second magnitude. The first magnitude may be a first expected value associated with the set of out of sample errors corresponding to the set of points. The second magnitude may be a second expected value associated with out of sample errors of a portion of the training data and may be associated with the particular point, where the portion may exclude the particular point. The methods may also include transforming the set of gradient values into modified density data. The methods may also include generating alternative training data based on the modified density data.

In some examples, machine learning environment systems are generally described. The systems may include a memory. The memory may be configured to store training data that comprises training inputs and training labels. The memory may also be configured to store test data that corresponds to a set of points. The systems may also include an evaluation module. The evaluation module may be configured to be in communication with the memory. The evaluation module may be configured to receive the training data. The evaluation module may also be configured to receive the test data. The evaluation module may also be configured to determine a set of out of sample errors based on the training data. The systems may also include a density modification module. The density modification module may be configured to be in communication with the memory and the evaluation module. The density modification module may be configured to receive the set of out of sample errors. The density modification module may also be configured to determine a set of gradient values based on the set of out of sample errors. The set of gradient values may correspond to the set of points in the test data. Each respective gradient value may correspond to a particular point in the test data and may relate to a first magnitude and to a second magnitude. The first magnitude may be a first expected value associated with the set of out of sample errors corresponding to the set of points. The second magnitude may be a second expected value associated with out of sample errors of a portion of the training data and may be associated with the particular point, where the portion may exclude the particular point. The systems may also include a processing module configured to be in communication with the memory, the evaluation module, and the density modification module. The processing module may be configured to receive the set of gradient values. The processing module may be configured to transform the set of gradient values into modified density data. The processing module may also be configured to generate alternative training data based on the modified density data.

In some examples, methods in a machine learning environment are generally described. The methods may include receiving training data, where the training data comprises training inputs and training labels. The methods may also include receiving test data, where the test data corresponds to a set of points. The methods may also include determining a set of out of sample errors based on the training data. The methods may also include determining a first set of weights based on a density of the training data. The methods may also include translating the first set of weights to produce translated weights. The methods may also include determining a second set of weights based on the translated weights. The methods may also include determining a set of gradient values based on the set of out of sample errors, the first set of weights, and the second set of weights. The set of gradient values may correspond to the set of points in the test data. Each respective gradient value may correspond to a particular point in the test data and may relate to a first magnitude and to a second magnitude. The first magnitude may be a first expected value associated with the set of out of sample errors corresponding to the set of points. The second magnitude may be a second expected value associated with out of sample errors of a portion of the training data and may be associated with the particular point, where the portion may exclude the particular point. The methods may also include transforming the set of gradient values into modified density data. The methods may also include generating alternative training data based on the modified density data.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE FIGURES

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:

Fig. 1 illustrates an example system that can be utilized to implement alternative training distribution based on density modification;
Fig. 2 illustrates the example system of Fig. 1 with additional detail relating to a determination of a set of gradient values;
Fig. 3 illustrates the example system of Fig. 1 with additional detail relating to a generation of alternative training data;
Fig. 4 illustrates a flow diagram for an example process to implement alternative training distribution based on density modification;
Fig. 5 illustrates an example computer program product that can be utilized to implement alternative training distribution based on density modification; and
Fig. 6 is a block diagram illustrating an example computing device that is arranged to implement alternative training distribution based on density modification; all arranged according to at least some embodiments described herein.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented herein. It will be readily understood that the aspects of the present disclosure, as generally described herein, and illustrated in the Figures, can be arranged, substituted, combined, separated, and designed in a wide variety of different configurations, all of which are explicitly contemplated herein.

Briefly stated, technologies are generally described for methods and systems in a machine learning environment. In an example, a processor may receive training data and test data. The training data may include training inputs and training labels, where each pair of training input and training label may correspond to a sample at a training point. The training data may be used by a machine learning module to train a learned function. The test data may be used to test an accuracy or performance of the learned function trained by the training data. An example of training inputs of the training data may be a lot size of a home and a living space of a home, such that an example of training labels of the training data may be a home price. The learned function may be trained by determining a fitted curve of the training data. Test data may include test inputs corresponding to test points. In the example, the learned function may be applied to a home lot size (test input) to determine a home price (test label) of a home (test point), where the determined home price may be different from a training label corresponding to a training input equivalent to the test input. In some examples, a number of samples in training data samples may be different from a number of test inputs in the test data. A processor may determine a set of out of sample errors based on the training data and test data. For example, a processor may determine a learned function based on the training data. In the example, the processor may determine a function relating to calculating or predicting home prices. A processor may further determine test labels of the test data based on an application of the learned function to the test inputs. In the example, the processor may determine home prices based on inputs in the test data. A processor may determine the out of sample errors based on differences between the test labels and the training labels of the training data. In the example, the processor may determine a difference in home prices calculated for a particular test input and a home price found in a training label. A processor may determine a set of gradient values based on the out of sample errors, where the set of gradient values may correspond to the test data. Each respective gradient value may relate to a first magnitude and to a second magnitude. The first magnitude may be a first expected value associated with the set of out of sample errors at a particular point of the test data. The second magnitude may be a second expected value associated with out of sample errors of a portion of the training data and may be associated with the particular point, where the portion may exclude the particular point, and the particular point may be a fixed point among the training data. In some examples, a processor may determine a gradient value based on a difference between the first and second magnitudes. A processor may transform the set of gradient values into modified density data, such that alternative training data may be generated based on the modified density data. For example, the modified density data may be used to weight some of the training data before the training data is used to determine the learned function.

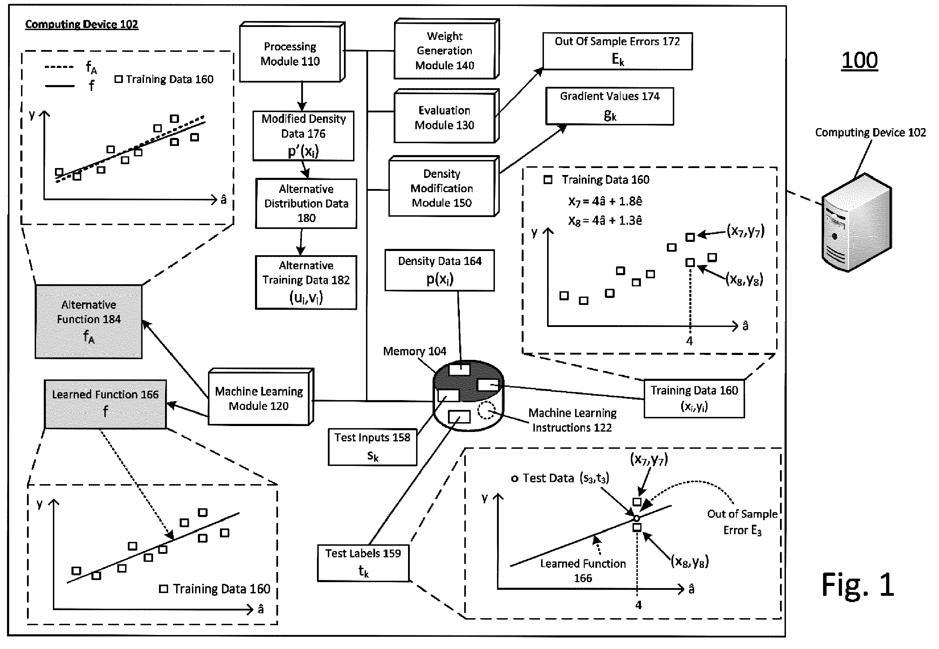

Fig. 1 illustrates an example system 100 that can be utilized to implement alternative training distribution based on density modification, arranged in accordance with at least some embodiments described herein. System 100 may be implemented with or using a computing device 102, where computing device 102 may be a computer or a server. Computing device 102 may include a processing module 110, a machine learning module 120, an evaluation module 130, a weight generation module 140, and/or a density modification module 150. Processing module 110, machine learning module 120, evaluation module 130, weight generation module 140, and/or density modification module 150 may be configured to be in communication with each other. Computing device 102 may further include a memory 104 configured to be in communication with processing module 110, machine learning module 120, evaluation module 130, weight generation module 140, and/or density modification module 150. In some examples, each module in computing device 102 may be a hardware component or an embedded system comprising integrated circuits such as FPGA (Field Programmable Gate Array), SoC (System on Chip), etc. In some examples, each module in computing device 102 may be a respective processor, or may include respective sets of processors, configured to perform one or more tasks. Some example processors may include graphics processors, routing processors, general purpose processors, digital signal processors, etc. In some examples, a first module may be embedded in a second module. For example, density modification module 150 may be embedded in evaluation module 130. In some examples, processing module 110, machine learning module 120, evaluation module 130, and/or density modification module 150 may be components of a processor configured to be in communication with computing device 102.

Memory 104 may be further configured to store machine learning instructions 122. Machine learning instructions 122 may include instructions associated with operations of evaluation module 130, and/or density modification module 150. In some examples, machine learning instructions 122 may be stored in machine learning module 120. Machine learning module 120 may be configured to execute machine learning instructions 122 to determine functions, such as a learned function 166 (denoted as f), based on training data 160 (denoted as $(x_i, y_i)$). Memory 104 may be configured to store training data 160. Training data 160 may include training inputs $x_i$ and training labels $y_i$, where each pair of training input $x_i$ and training label $y_i$ may be a sample at a point i. For example, assuming that learned function 166 relates to a home price prediction function, a sample may be a home and a point may be an identification such as a home address. Training inputs $x_i$ may be a set of vectors, where each training input $x_i$, at a point i may be a vector including one or more coordinates, and a coordinate may be a dimension of the vector. In the example where learned function 166 relates to a home price prediction function, a lot size of a home may be a first coordinate, a living space of a home may be a second coordinate, of a particular home, where the particular home may be a vector. In the example, a training input $x_7 = 4â + 1.8ê$ may represent a home with a lot size 4,000 square feet and a living space of 1,800 square feet, and a training input $x_8 = 4â + 1.3ê$ may represent a home with a lot size 4,000 square feet and a living space of 1,300 square feet. In an example where machine learning instructions 122 include polynomial curve fitting instructions, machine learning module 120 may determine a curve fitted to training data 160 such that learned function 166 may be a linear function. In some examples, machine learning module 120 may determine learned function 166 based on one or more coordinates of training inputs $x_i$ of training data 160. For example, machine learning module 120 may determine a home price prediction function (learned function 166) based on a lot size of a home (coordinate â). In some examples, processing module 110 may be configured to generate training data 160 based on a distribution indicated by machine learning instruction 122 or by a user of system 100. In some examples, training data 160 may include samples where values of training inputs $x_i$ and training labels $y_i$ are fixed, such that processing module 110 may not need to generate training data 160. In some examples, processing module 110 may generate a portion of training data 160 while keeping a remaining portion of training data 160 fixed.

Processing module 110 may be configured to determine density data 164 (denoted as $p(x_i)$) for training data 160, where density data 164 may include densities to be applied to training inputs $x_i$ of training data 160. A density of a particular training input (e.g. $x_7$) may relate to a weight or probability of the particular training input with respect to other training inputs $x_i$ of training data 160. In an example, if training data 160 includes 10 samples and if training inputs $x_i$ are equally distributed, then densities of each training input $x_i$ may be 0.1. Processing module 110 may be further configured to receive or determine a set of test inputs 158 (denoted as $s_k$), where test inputs 158 may correspond to a set of test points (denoted as k). In some examples, test inputs 158 may be a subset of training inputs $x_i$ of training data 160, and may be stored in memory 104. In some examples, test inputs 158 may be received at computing device 102 from a device outside of system 100. In some examples, a number of test inputs 158 may be less than a number of training inputs $x_i$ in training data 160.

Machine learning module 120 may be further configured to apply learned function 166 to test inputs 158 to determine a set of test labels 159 (denoted as $t_k$). In the example, machine learning module 120 may apply learned function 166 to a test input $s_3 = 4\hat{a} + 1.6\hat{e}$ to determine a test label $t_3$, such that test label $t_3$ includes a value on the curve (learned function 166) fitted to training data 160. Test label $t_3$ may be different from training label $y_7$ and training label $y_8$. After determining test labels 159, machine learning module 120 may store test labels 159 in memory 104.

Evaluation module 130 may be configured to determine a set of out of sample errors 172 (denoted as $E_k$) based on differences between test labels $t_k$ and training labels $y_i$ of training data 160. Each out of sample error 172 may be associated with an expected value of differences between a test label $t_k$ and one or more training labels $y_i$ of training data 160. For example, an out of sample error $E_3$ may be associated with an expected value between test label $t_3$ and training labels $y_7$, $y_8$ corresponding to test input $s_3$ and training inputs $x_7$, $x_8$, respectively. Evaluation module 130 may store out of sample errors 172 in memory 104.

As will be described in more detail below, density modification module 150 may be configured to determine a set of gradient values 174 (denoted as $g_k$) based on out of sample errors 172, where each gradient value $g_k$ may relate to a first magnitude and to a second magnitude associated with out of sample errors 172 and/or training data 160 (first and second magnitudes will be described in more detail below). As a result of determining gradient values 174, processing module 110 may transform gradient values 174 into modified density data 176 (denoted as $p'(x_i)$), where modified density data 176 may be a modification of density data 164. Processing module 110 may be configured to determine alternative distribution data 180 based on modified density data 176, where alternative distribution data 180 may be associated with a distribution of alternative samples, which may be same or different from samples of training data 160. Processing module 110 may be further configured to generate alternative training data 182 (denoted as $(u_i, v_i)$), such as by sampling samples from alternative distribution data 180, where alternative training data 182 may be different from training data 160. Machine learning module 120 may be further configured to determine alternative function 184 (denoted as $f_A$) based on alternative training data 182, such that alternative function 184 may perform with relatively smaller out of sample errors when compared to a performance of learned function 166.

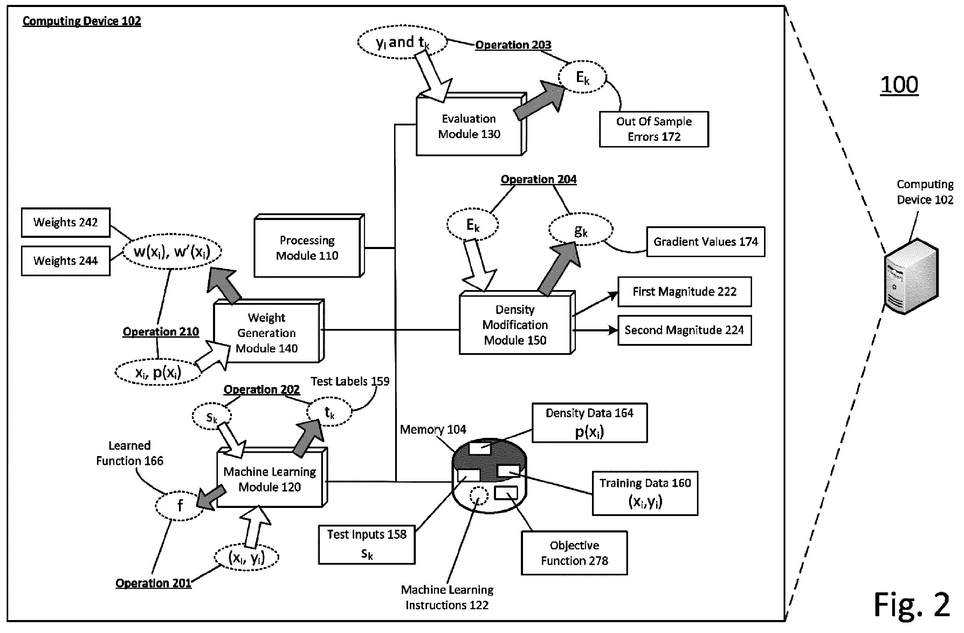

Fig. 2 illustrates example system of 100 Fig. 1 with additional detail relating to determination of a set of gradient values, arranged in accordance with at least some embodiments described herein. Fig. 2 is substantially similar to system 100 of Fig. 1, with additional details. Those components in Fig. 2 that are labeled identically to components of Fig. 1 will not be described again for the purposes of clarity.

An example determination of gradient values 174 may include one or more operations, such as operations 201, 202, 203, 204, 210, etc., where each operation will be described in more detail below. Although illustrated as individual operations, various operations may be divided into additional operations, combined into fewer operations, or eliminated, depending on the desired implementation of system 100. In an example, determination of gradient values 174 may begin with operation 201. At operation 201, machine learning module 120 may receive training data 160 and may determine learned function 166. In some examples, machine learning module 120 may retrieve training data 160 from memory 104. As mentioned above, machine learning module 120 may determine learned function 166 based on training data 160 and/or machine learning instructions 122.

Determination of gradient values 174 may continue from operation 201 to operation 202. At operation 202, machine learning module 120 may receive test inputs 158 and may determine test labels 159. In some examples, machine learning module 120 may retrieve test inputs 158 from memory 104. As mentioned above, machine learning module 120 may determine test labels 159 based on an application of learned function 166 to test inputs 158. Machine learning module 120 may store test labels 159 in memory 104, and may send test labels 159 to evaluation module 130.

Determination of gradient values 174 may continue from operation 202 to operation 203. At operation 203, evaluation module 130 may receive training labels $y_i$ of training data 160, test labels $t_k$, and may determine out of sample errors 172. In some examples, evaluation module 130 may retrieve training labels $y_i$ and/or test labels $t_k$ from memory 104. In some examples, training labels $y_i$ and test labels $t_k$ may be provided to evaluation module 130 by a device outside of system 100. In the example, evaluation module 130 may compare training labels $y_i$ with corresponding test labels 159 to determine out of sample errors 172 (denoted $E_k$).

In an example, evaluation module 130 may determine that test label $t_3$ may be different from training labels $y_7$, $y_8$. Evaluation module 130 may determine out of sample error $E_3$ by determining an expected value of differences between test label $t_3$ and training labels $y_7$, $y_8$. For example, if a first difference between test label $t_3$ and training label $y_7$ is "8", and a second difference between test label $t_3$ and training label $y_8$ is "5", then an expected value of the first and second differences is "6.5", such that out of sample error $E_3$ is "6.5". Evaluation module 130 may output out of sample errors $E_k$, and may store out of sample errors $E_k$ in memory 104. Evaluation module 130 may further send out of sample errors $E_k$ to density modification module 150.

Determination of gradient values 174 may continue from operation 203 to operation 204. At operation 204, density modification module 150 may receive out of sample errors 172 (denoted as $E_k$), and may determine gradient values 174. In some examples, density modification module 150 may retrieve out of sample errors 172 from memory 104. Density modification module 150 may determine a first magnitude 222, and a second magnitude 224 for each test point k based on out of sample errors 172. First magnitude 222 may be a first expected value associated with out of sample errors 172. For example, first magnitude 222 may be an expected value of out of sample errors $E_1$, $E_2$, and $E_3$. Second magnitude 224 of a particular test point k may be a second expected value associated with out of sample errors of a portion of training data 160, and associated with the particular test point k, where the portion excludes the particular test point k, and the particular test point k may be a fixed point among training data 160. For example, at test point k = 3, test data $(s_3, t_3)$ may replace training data $(x_7, y_7)$ among training data 160, such that second magnitude 224 of test point k = 3 may be an expected value associated with a value corresponding to test point k = 3 (e.g. test label $t_3$) and out of sample errors 172 corresponding to training points i = 1, 2, 3, 4, 5, 6, 8, 9, 10. Density modification module 150 may determine a difference between the first magnitude 222 and second magnitude 224 at point k = 3 to determine a gradient value $g_3$. Density modification module 150 may determine differences between first magnitude 222 and second magnitude 224 at each test point k to determine a set of gradient values 174 (denoted as $g_k$). Density modification module 150 may store gradient values 174 in memory 104, and may send gradient values 174 to processing module 110.

In an example, system 100 may be implemented under a supervised machine learning environment, such that a number of samples in training data 160 may be fixed. When training data 160 includes a fixed number of samples, generation of gradient values 174 may further include an operation 210, where operation 210 may be executed prior to operation 204. At operation 210, weight generation module 140 may receive training inputs $x_i$ of training data 160 and density data 164 (denoted as $p(x_i)$), and may determine a first set of weights 242 (denoted as $w(x_i)$) and a second set of weights 242 (denoted as $w'(x_i)$). Weight generation module 140 may determine the first set of weights 242 based on density data 164 and training inputs $x_i$ of training data 160. Weight generation module 140 may translate weights 242, such as by incrementing weights 242 to produce incremented weights, and by normalizing the incremented weights. Weight generation module 140 may determine second set of weights 244 based on the translated weights produced by a translation of weights 242. For example, weight generation module 140 may increment $w(x_1)$ to translate $w(x_1)$ into $w'(x_1)$. Weight generation module 140 may normalize the set of weights 242 including $w'(x_1)$ such that weights 242, of other points i (i.e. i≠1), may change due to the normalization. Weight generation module 140 may continue to determine weights 242, 244 for each respective point i and may send weights 242, 244 to evaluation module 130.

In some examples, prior to determining out of sample errors 172 and gradient values 174, evaluation module 130 may determine an objective function 278 based on training data 160, learned function 166, test inputs 158, etc. In some examples, evaluation module 130 may apply function calculus techniques to determine objective function 278. For example, objective function 278 may be expressed in a functional calculus format such as:

$$J(p) = \int_{x_N} \cdots \int_{x_1} L(x_1, \ldots, x_N) \prod_{i=1}^{N} p(x_i) dx_1 \cdots dx_N$$

where:

J(p) denotes a function relating to a Lagrange equation;
N denotes a number of samples in training data 160;
$L(x_1,\ldots,x_N)$ denotes a loss function associated with out of sample errors 172; and $p(x_i)$ denotes density data 164.

In some examples, the above loss function L may be an expected value of out of sample errors 172 at one or more points, such as:

$$L(x_1, \ldots, x_N) = \mathbb{E}_{x \sim P_S, f, \epsilon}[E_{out}(x, R, f, \epsilon)]$$

Evaluation module 130 may analyze objective function 278 and may determine a condition in which gradient values 174 may satisfy to optimize objective function 278. In the example, a basis to determine a condition in which gradient values 174 may satisfy to optimize objective function 278 may be:

$$\psi^{\star} = \arg\min_{\psi} \int_{x_N} \cdots \int_{x_1} e^{\Lambda(x_1,\ldots,x_N)) + \sum_{i=1}^{N} \psi(x_i)} dx_1 \cdots dx_N$$

subject to:

$$\int e^{\psi(x)} dx = 1$$

Evaluation module 130 may determine that, in order to optimize objective function 278, based on the basis above, the following condition may be satisfied:

$$N p(x_n) \left( \mathbb{E}_{\substack{x_i \sim p \\ i \neq n}} [L(x_1,\ldots,x_N)] - \mathbb{E}_{\substack{x_i \sim p \\ i=1,\ldots,N}} [L(x_1,\ldots,x_N)] \right) = 0$$

where

   N denotes a number of samples in training data 160;
   $p(x_n)$ denotes a density of a training input $x_n$;
   $L(x_1,\ldots,x_N)$ denotes the loss function associated with out of sample errors 172.

The condition above requires a product of $Np(x_n)$ and respective gradient value 174 equals zero. As will be described in more detail below, based on the above condition, processing module 110 may determine whether to increase or decrease density data 164 (denoted as $p(x_i)$), or set a particular density data 164 to zero, based on a value of a corresponding gradient value 174 (denoted as $g_k$).

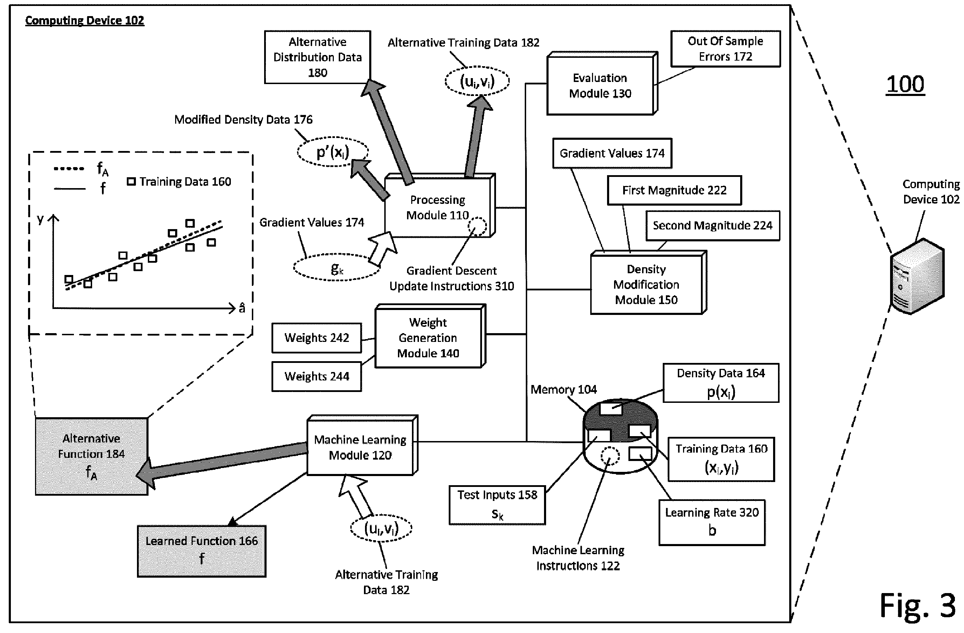

Fig. 3 illustrates example system of 100 Fig. 1 with additional detail relating to determination of alternative training data, arranged in accordance with at least some embodiments described herein. Fig. 3 is substantially similar to system 100 of Fig. 1, with additional details. Those components in Fig. 3 that are labeled identically to components of Fig. 1 will not be described again for the purposes of clarity.

In some examples, memory 104 may be further configured to store a learning rate 320 (denoted as b), where learning rate 320 may be a parameter determined by computing device 102, or may be a parameter arbitrarily set by a user of system 100. In some examples, learning rate 320 may be a parameter being used in a transformation of gradient values 174 into modified density data 176. For example, processing module 110 may multiple learning rate 320 with a gradient value 174 to determine how much to increase or how much to decrease a corresponding density in density data 164, in order to transform gradient values 174 into modified density data 176. In some examples, learning rate 320 may be defined by machine learning instructions 122 stored in memory 104. In some examples, learning rate 320 may be based on density data 164, or may be based on a set of weights generated by weight generation module 140.

In an example, processing module 110 may receive gradient values 174 and may determine modified density data 176. In some examples, processing module 110 may transform gradient values 174 into modified density data 176 by modifying density data 164 based on a magnitude of each gradient value 174. In an example, processing module 110 may determine that a particular gradient value 174 is less than zero. Processing module 110 may increase a corresponding density data 164 in response to the particular gradient value 174 being less than zero, where the increased density data 164 may be transformed to a corresponding modified density data 176. In another example, processing module 110 may determine that a particular gradient value 174 is greater than zero. Processing module 110 may decrease a corresponding density data 164 in response to the particular gradient value 174 being greater than zero, where the decreased density data 164 may be transformed to a corresponding modified density data 176. In another example, processing module 110 may determine that a particular gradient value 174 is less than zero. Processing module 110 may set a corresponding density data 164 to zero in response to the particular gradient value 174 being set to zero, processing module 110 may set a corresponding modified density data 176 to zero.

In some examples, in response to a modification of any density data 164, processing module 110 may normalize all density data 164. For example, processing module 110 may decrease density data $p(x_1)$ in response to $g_1$ being greater than zero. Processing module 110 may normalize density data $p(x_1)$ including the decreased density data, or modified density data, $p'(x_1)$. In some examples, processing module 110 may normalize density data 164 to satisfy a condition where a sum of $p(x_1)$ for all points i should equal to 1.

In some examples, processing module 110 may store gradient descent update instructions 310, where gradient descent update instructions 310 may be related to a gradient descent update technique. In some examples, gradient descent update instructions 310 may be a part of machine learning instructions 122. In some examples, processing module 110 may be configured to execute gradient descent update instructions 310 to transform gradient values 174, such that modified density data 176 may be determined. In some examples, processing module 110 may initialize density data $p(x_1)$ to a smooth function that is positive for every $x_i$ prior to an application of gradient descent update instructions 310. In some examples, determination of modified density data 176 may be further based on training data 160, test inputs 158, and/or learning rate 320. Below is an example process which may be executed by processing module 110 to determine modified density data 176 based on gradient descent update instructions 310:

where:

Ps denotes a probability distribution of test inputs 158;
$L(\cdot)$ denotes a loss function associated with out of sample errors 172;
$\eta$ denotes learning rate 320;
N denotes a number of samples in training data 160;
X denotes an input space of training data 160;
$X_D$ denotes a discretized input space of training data 160;
$x_n$ denotes training inputs $x_i$ of training data 160;
$\nabla(L(p(x_n))$ denotes gradient values 174, the first term of $\nabla(L(p(x_n))$ denotes second magnitude 224 and the second term of $\nabla(L(p(x_n))$ denotes first magnitude 222; and
$p(x_n)$ denotes modified density data 176.

In examples where system 100 is implemented under a supervised machine learning environment (as mentioned above, such that a number of samples of training data 160 may be fixed), processing module 110 may execute gradient descent update instructions 310 to determine modified density data 176 based on the following process:

where:

Ps denotes a probability distribution of test inputs 158;
$p_R$ denotes density data 164 of training data 160;
R denotes training data 160;
N denotes a number of samples in training data 160;
$L(\cdot)$ denotes a loss function associated with out of sample errors 172;
$\eta$ denotes learning rate 320;
$\omega$ denotes first set of weights 242;
$\omega$' denotes second set of weights 244;
$x_n$ denotes training inputs $x_i$ of training data 160;
$\nabla(L(p(x_n))$ denotes gradient values 174, the first term of $\nabla(L(p(x_n))$ denotes second magnitude 224 and the second term of $\nabla(L(p(x_n))$ denotes first magnitude 222; and
$p(x_n)$ denotes modified density data 176.

After transforming gradient values 174 into modified density data 176, processing module 110 may determine alternative training data 182 based on modified density data 176. Processing module 110 may determine alternative distribution 180 based on modified density data 176, and may generate or sample alternative training data 182 from alternative distribution data 180. Processing module 110 may send alternative training data 182 to machine learning module 120. Machine learning module 120 may determine alternative function 184 based on alternative training data 182, such as by determining a fitted curve for alternative training data 182.

Below are examples of experimental results relating to a distribution associated with test inputs 158 and alternative distribution data 180.

where "Test Dist" denotes a probability distribution associated with test inputs 158, and "Dual Dist" denotes alternative distribution data 180. As a result of determining, by machine learning module 120, alternative function 184 based on alternative training data 182, alternative function 184 may perform with relatively less out of sample errors when compared with a performance of learned function 166. For example, below are some experimental results showing a difference in performance between samples of alternative function 184 and learned function 166:

In another example, where system 100 is implemented under a supervised machine learning environment (as mentioned above, such that a number of samples of training data 160 may be fixed), some experimental results showing a difference in performance between samples of alternative function 184 and learned function 166 include:

In an example, learned function 166 may be a linear model with non-linear transformations, and objective function 278 may be associated with a squared loss error function. Loss function L, associated with out of sample errors 172 and first and second magnitudes 222, 224, may be:

$$L(x_1, \ldots, x_N) = \sigma_N^2 + \mathbb{E}_{x \sim P_S} \left[ \sigma_N^2 \phi_M(x)^T \Phi_{MM}^{-1} \phi_M(x) + \sigma_C^2 \| \phi_C(x)^T - \phi_M(x)^T \Phi_{MM}^{-1} \Phi_{MC} \|^2 \right]$$

where:

$\sigma_N^2$ denotes a standard deviation of a noise parameter;

$\sigma_c^2$ denotes a standard deviation of features outside of a target function associated with a model of learned function 166;

$\Phi_M(x)$ denotes the non-linear transformation of a test input 158 into features of a model associated with learned function 166; and

$\Phi_c(x)$ denotes the non-linear transformation of a test input 158 into features outside of a model associated with learned function 166.

Density modification module 150 may apply the above loss function to test inputs 158 in order to determine gradient values 174. Density modification module 150 may translate test inputs 158 based on the following transformations prior to applying the above loss function:

$$\Phi_{MM} = \sum_{i=1}^{N} \phi_M(x_i)\phi_M(x_i)^T,$$

$$\Phi_{MC} = \sum_{i=1}^{N} \phi_M(x_i)\phi_C(x_i)^T.$$

In some examples, density modification module 150 may apply a Sherman-Morrison technique to test inputs 158 in order to determine an expected value of the loss function above:

$$\Phi_{MM}^{-1} = \Phi_{MM,n}^{-1} - \frac{\Phi_{MM,n}^{-1} \phi_M(x_n)\phi_M(x_n)^T \Phi_{MM,n}^{-1}}{1 + \phi_M(x_n)^T \Phi_{MM,n}^{-1} \phi_M(x_n)},$$

$$\Phi_{MM,n} = \sum_{\substack{i=1 \\ i \neq n}}^{N} \phi_M(x_i)\phi_M(x_i)^T.$$

In some examples, density modification module 150 may apply Monte Carlo simulation techniques to the above mentioned transformations of test inputs 158 in order to determine first and second magnitudes 222, 224. By using the Sherman-Morrison and Monte Carlo techniques, a determination of gradient values 174 and a transformation of gradient values 174 into modified density data 176 may require relatively less operations when compared with a number of operations required in an application of a gradient descent update technique.

A system in accordance with the present disclosure may benefit machine learning systems. A system may provide an alternative training data to train the machine learning system. The alternative training data, which may be generated based on minimizing an effect of a particular out of sample error at a particular point, may cause the machine learning system to learn a function which may perform at a better error rate.

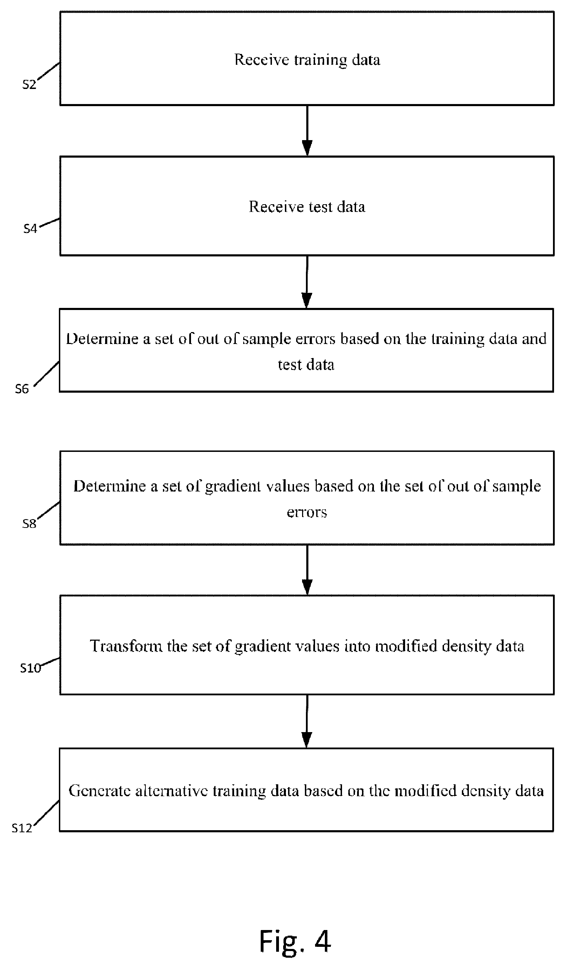

Fig. 4 illustrates a flow diagram for an example process to implement alternative training distribution based on density modification, arranged in accordance with at least some embodiments presented herein. The process in Fig. 4 could be implemented using, for example, system 100 discussed above. An example process may include one or more operations, actions, or functions as illustrated by one or more of blocks S2, S4, S6, S8, S10, and/or S12. Although illustrated as discrete blocks, various blocks may be divided into additional blocks, combined into fewer blocks, or eliminated, depending on the desired implementation.

Processing may begin at block S2, "Receive training data". At block S2, a computing device, a processor, or a module of a computing device, may receive training data. Training data may include training inputs and training labels.

Processing may continue from block S2 to block S4, "Receive test data". At block S4, the computing device, the processor, or the module of the computing device, may receive test data, where the test data may correspond to a set of points. In some examples, the test data may be received before, after, or substantially at the same time as receiving the training data.

Processing may continue from block S4 to block S6, "Determine a set of out of sample errors based on the training data and test data". At block S6, the computing device, the processor, or the module of the computing device, may determine a set of out of sample errors based on the training data and the test data. In some examples, a processor may determine a function based on the training data. A processor may generate a set of test labels based on the function, such as by applying the function to the test data. A processor may compare the set of test labels with the training labels of the training data to determine the set of out of sample errors.

Processing may continue from block S6 to block S8, "Determine a set of gradient values based on the set of out of sample errors". At block S8, the computing device, the processor, or the module of the computing device, may determine a set of gradient values based on the set of out of sample errors. The set of gradient values may correspond to the set of points in the test data. Each respective gradient value may correspond to a particular point in the test data, and may relate to a first magnitude and to a second magnitude. The first magnitude may be a first expected value associated with the set of out of sample errors corresponding to the set of points. The second magnitude may be a second expected value associated with out of sample errors of a portion of the training data and may be associated with the particular point, where the portion may exclude the particular point. In some examples, the particular point may be a fixed point among the training data. In some examples, a processor may determine the first magnitude and may determine the second magnitude. A processor may determine a difference between the first magnitude and the second magnitude. A processor may determine the set of gradient values based on the difference between the first magnitude and the second magnitude.

Processing may continue from block S8 to block S10, "Transform the set of gradient values into modified density data". At block S10, the computing device, the processor, or the module of the computing device, may transform the set of gradient values into modified density data. In some examples, a processor may determine whether a gradient value is greater than or less than zero. In response to a gradient value being greater than zero, a processor may decrease a density of a point corresponding to the gradient. In response to a gradient value being less than zero, a processor may increase a density of a point corresponding to the gradient. In response to a gradient value being less than zero, a processor may set a density of a point corresponding to the gradient to zero.

Processing may continue from block S10 to block S12, "Generate alternative training data based on the modified density data". At block S8, the computing device, the processor, or the module of the computing device, may generate alternative training data based on the modified density data. A processor may determine a function based on the alternative training data.

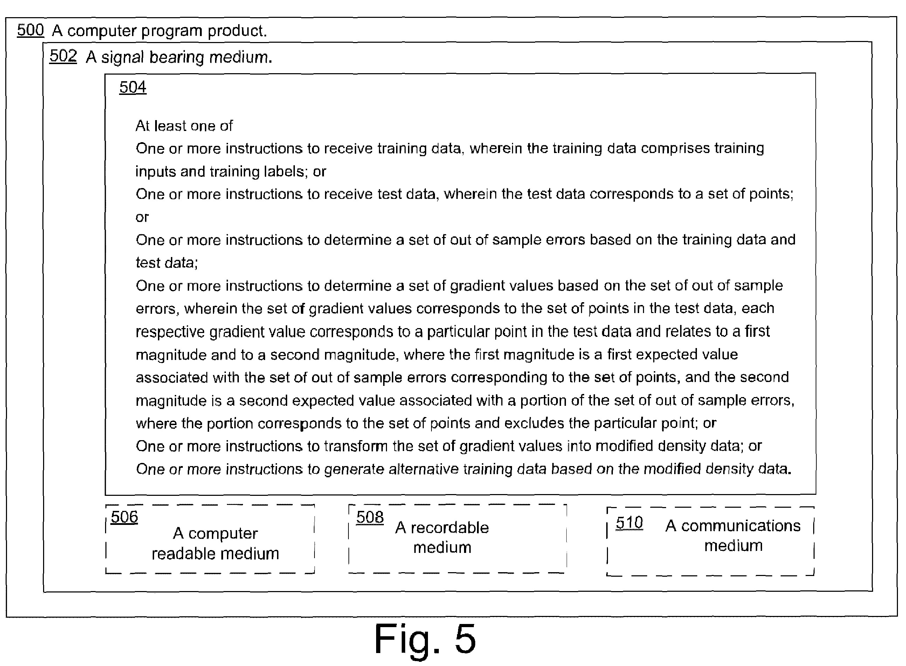

Fig. 5 illustrates an example computer program product that can be utilized to implement alternative training distribution based on density modification, arranged in accordance with at least some embodiments presented herein. Program product 500 may include a signal bearing medium 502. Signal bearing medium 502 may include one or more instructions 504 that, when executed by, for example, a processor, may provide the functionality described above with respect to Figs. 1-4. Thus, for example, referring to system 100, computing device 102 may undertake one or more of the blocks shown in Fig. 5 in response to instructions 504 conveyed to the system 100 by medium 502.

In some implementations, signal bearing medium 502 may encompass a computer readable medium 506, such as, but not limited to, a hard disk drive, a Compact Disc (CD), a Digital Versatile Disc (DVD), a digital tape, memory, etc. In some implementations, signal bearing medium 502 may encompass a recordable medium 508, such as, but not limited to, memory, read/write (R/W) CDs, R/W DVDs, etc. In some implementations, signal bearing medium 502 may encompass a communications medium 510, such as, but not limited to, a digital and/or an analog communication medium (e.g., a fiber optic cable, a waveguide, a wired communications link, a wireless communication link, etc.). Thus, for example, program product 500 may be conveyed to one or more modules of the system 100 by an RF signal bearing medium 502, where the signal bearing medium 502 is conveyed by a wireless communications medium 510 (e.g., a wireless communications medium conforming with the IEEE 802.11 standard).

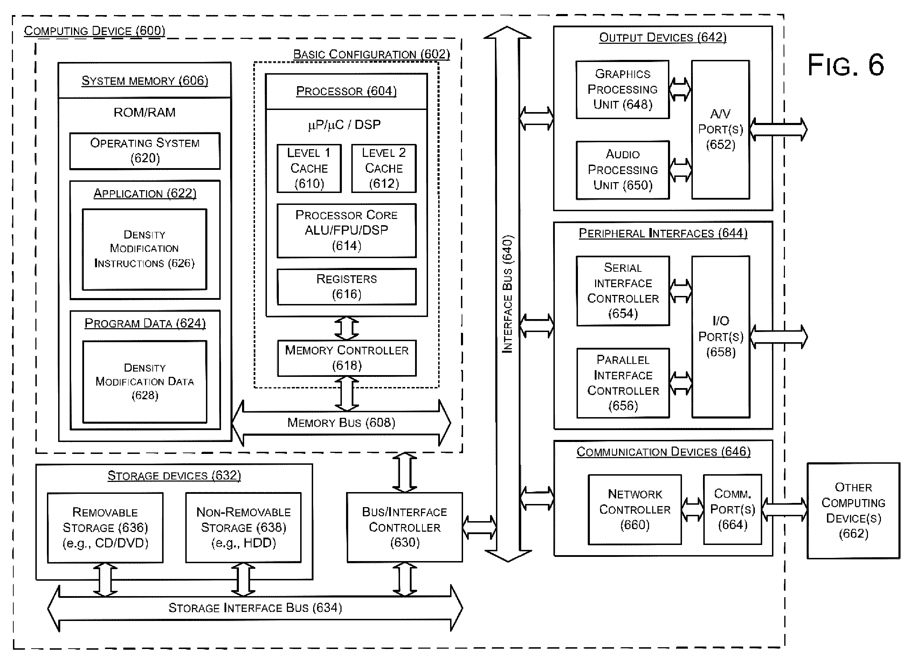

Fig. 6 is a block diagram illustrating an example computing device that is arranged to implement alternative training distribution based on density modification, arranged in accordance with at least some embodiments presented herein. In a very basic configuration 602, computing device 600 typically includes one or more processors 604 and a system memory 606. A memory bus 608 may be used for communicating between processor 604 and system memory 606.

Depending on the desired configuration, processor 604 may be of any type including but not limited to a microprocessor (μP), a microcontroller (μC), a digital signal processor (DSP), or any combination thereof. Processor 604 may include one more levels of caching, such as a level one cache 610 and a level two cache 612, a processor core 614, and registers 616. An example processor core 614 may include an arithmetic logic unit (ALU), a floating point unit (FPU), a digital signal processing core (DSP Core), or any combination thereof. An example memory controller 618 may also be used with processor 604, or in some implementations memory controller 618 may be an internal part of processor 604.

Depending on the desired configuration, system memory 606 may be of any type including but not limited to volatile memory (such as RAM), non-volatile memory (such as ROM, flash memory, etc.) or any combination thereof. System memory 606 may include an operating system 620, one or more applications 622, and program data 624. Application 622 may include density modification instructions 626 that is arranged to perform the functions as described herein including those described previously with respect to Figs. 1-5. Program data 624 may include density modification data 628 that may be useful for alternative training distribution based on density modification as is described herein. In some embodiments, application 622 may be arranged to operate with program data 624 on operating system 620 such that alternative distribution training data in machine learning may be provided. This described basic configuration 602 is illustrated in Fig. 6 by those components within the inner dashed line.

Computing device 600 may have additional features or functionality, and additional interfaces to facilitate communications between basic configuration 602 and any required devices and interfaces. For example, a bus/interface controller 630 may be used to facilitate communications between basic configuration 602 and one or more data storage devices 632 via a storage interface bus 634. Data storage devices 632 may be removable storage devices 636, non-removable storage devices 638, or a combination thereof. Examples of removable storage and non-removable storage devices include magnetic disk devices such as flexible disk drives and hard-disk drives (HDD), optical disk drives such as compact disc (CD) drives or digital versatile disc (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 606, removable storage devices 636 and non-removable storage devices 638 are examples of computer storage media. Computer storage media includes, but is not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other medium which may be used to store the desired information and which may be accessed by computing device 600. Any such computer storage media may be part of computing device 600.

Computing device 600 may also include an interface bus 640 for facilitating communication from various interface devices (e.g., output devices 642, peripheral interfaces 644, and communication devices 646) to basic configuration 602 via bus/interface controller 630. Example output devices 642 include a graphics processing unit 648 and an audio processing unit 650, which may be configured to communicate to various external devices such as a display or speakers via one or more A/V ports 652. Example peripheral interfaces 644 include a serial interface controller 654 or a parallel interface controller 656, which may be configured to communicate with external devices such as input devices (e.g., keyboard, mouse, pen, voice input device, touch input device, etc.) or other peripheral devices (e.g., printer, scanner, etc.) via one or more I/O ports 658. An example communication device 646 includes a network controller 660, which may be arranged to facilitate communications with one or more other computing devices 662 over a network communication link via one or more communication ports 664.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Computing device 600 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Computing device 600 may also be implemented as a personal computer including both laptop computer and non-laptop computer configurations.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds compositions or biological systems, which can, of course, vary. It is also to be understood that the terminology used herein is for the purpose of describing particular embodiments only, and is not intended to be limiting.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g.,* "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (*e.g.,* "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Claims**

1.  A method in a machine learning environment, the method comprising:

    receiving training data, wherein the training data comprises training inputs and training labels;
    receiving test data, wherein the test data corresponds to a set of points;
    determining a set of out of sample errors based on the training data and test data;

determining a set of gradient values based on the set of out of sample errors, wherein the set of gradient values corresponds to the set of points in the test data, each respective gradient value corresponds to a particular point in the test data and relates to a first magnitude and to a second magnitude, where the first magnitude is a first expected value associated with the set of out of sample errors corresponding to the set of points, and the second magnitude is a second expected value associated with out of sample errors of a portion of the training data and associated with the particular point, where the portion excludes the particular point;

transforming the set of gradient values into modified density data; and

generating alternative training data based on the modified density data.

2. The method of claim 1, wherein determining the set of out of sample errors comprises:

determining a function based on the training data;
generating a set of test labels corresponding to the test data based on the function; and
comparing the set of test labels with the training labels of the training data to determine the set of out of sample errors.

3. The method of claim 2, wherein the function is a first function, and the method further comprises:

receiving the alternative training data; and
determining a second function based on the alternative training data, wherein the second function is different from the first function.

4. The method of claim 1, wherein determining the gradient value comprises:

determining the first magnitude;
determining the second magnitude;
determining a difference between the first magnitude and the second magnitude; and
determining the set of gradient values based on the difference.

5. The method of claim 1, wherein transforming the set of gradient values and the test data into the modified density data includes applying a gradient descent update technique.

6. The method of claim 1, wherein the alternative training data is different from the training data, and the alternative training data is different from the test data.

7. The method of claim 1, wherein determining the set of gradient values includes:

determining a first set of weights based on a density of the training data;
translating the first set of weights to produce translated weights;
determining a second set of weights based on the translated weights;
determining the first magnitude based on the first set of weights;
determining the second magnitude based on the second set of weights;
determining a difference between the first magnitude and the second magnitude; and
determining the set of gradient values based on the difference.

8. The method of claim 1, wherein the particular point is a fixed point among the training data.

9. A machine learning environment system, the system comprising:

a memory configured to:

store training data that comprises training inputs and training labels; and
store test data that corresponds to a set of points;

an evaluation module configured to be in communication with the memory, the evaluation module being configured to:

receive the training data;

receive the test data; and
determine a set of out of sample errors based on the training data;

a density modification module configured to be in communication with the memory and the evaluation module, the density modification module being configured to:

receive the set of out of sample errors;
determine a set of gradient values based on the set of out of sample errors, wherein the set of gradient values corresponds to the set of points in the test data, each respective gradient value corresponds to a particular point in the test data and relates to a first magnitude and to a second magnitude, where the first magnitude is a first expected value associated with the set of out of sample errors corresponding to the set of points, and the second magnitude is a second expected value associated with out of sample errors of a portion of the training data and associated with the particular point, where the portion excludes the particular point;

a processing module configured to be in communication with the memory, the evaluation module, and the density modification module, the processing module being configured to:

receive the set of gradient values;
transform the set of gradient values into modified density data; and
generate alternative training data based on the modified density data.

10. The machine learning environment system of claim 9, wherein the density modification module is further configured to:

determine the first magnitude;
determine the second magnitude;
determine a difference between the first magnitude and the second magnitude; and
determine the set of gradient values based on the difference.

11. The machine learning environment system of claim 9, wherein the processing module is further configured to:

determine that a particular gradient value corresponding to the particular point is greater or less than zero;
in response to the determination that the particular gradient value corresponding to the particular point is greater than zero, decrease a density of the particular point; and
in response to the determination that the particular gradient value corresponding to the particular point is less than zero, increase a density of the particular point, and/or set a density of the particular point to zero.

12. A method in a machine learning environment, the method comprising:

receiving training data, wherein the training data comprises training inputs and training labels;
receiving test data, wherein the test data corresponds to a set of points;
determining a set of out of sample errors based on the training data;
determining a first set of weights based on a density of the training data;
translating the first set of weights to produce translated weights;
determining a second set of weights based on the translated weights;
determining a set of gradient values based on the set of out of sample errors, the first set of weights, and the second set of weights, wherein the set of gradient values corresponds to the set of points in the test data, each respective gradient value corresponds to a particular point in the test data and relates to a first magnitude and to a second magnitude, where the first magnitude is a first expected value associated with the set of out of sample errors corresponding to the set of points, and the second magnitude is a second expected value associated with out of sample errors of a portion of the training data and associated with the particular point, where the portion excludes the particular point;
transforming the set of gradient values into modified density data; and
generating alternative training data based on the modified density data.

13. The method of claim 12, wherein determining the set of gradient values comprises:

determining the first magnitude based on the first set of weights;

determining the second magnitude based on the second set of weights;
determining a difference between the first magnitude and the second magnitude; and
determining the set of gradient values based on the difference.

**14.** The method of claim 1 or claim 12, wherein transforming the set of gradient values into the modified density data comprises:

determining that a particular gradient value corresponding to the particular point is greater or less than zero;
in response to the determination that the particular gradient value

corresponding to the particular point is greater than zero, decreasing a density of the particular point; andin response to the
determination that the particular gradient value corresponding to the particular point is less than zero,

increasing a density of the particular point, and/or
setting a density of the particular point to zero.

Fig. 1

Computing Device 102

100

Computing Device 102

Processing Module 110

Weight Generation Module 140

Out Of Sample Errors 172 $E_k$

Evaluation Module 130

Gradient Values 174 $g_k$

Modified Density Data 176 $p'(x_i)$

Density Modification Module 150

Alternative Distribution Data 180

Alternative Training Data 182 $(u_i, v_i)$

Density Data 164 $p(x_i)$

Training Data 160
$x_7 = 4\hat{a} + 1.8\hat{e}$
$x_8 = 4\hat{a} + 1.3\hat{e}$
$(x_7, y_7)$
$(x_8, y_8)$

Alternative Function 184 $f_A$

Learned Function 166 $f$

Machine Learning Module 120

Memory 104

Machine Learning Instructions 122

Training Data 160 $(x_i, y_i)$

Test Inputs 158 $s_k$

Test Labels 159 $t_k$

Test Data $(s_3, t_3)$
$(x_7, y_7)$
Out of Sample Error $E_3$
Learned Function 166
$(x_8, y_8)$

$f_A$
$f$
Training Data 160

EP 3 115 939 A1

Fig. 2

Fig. 3

Receive training data

S2

Receive test data

S4

Determine a set of out of sample errors based on the training data and test data

S6

Determine a set of gradient values based on the set of out of sample errors

S8

Transform the set of gradient values into modified density data

S10

Generate alternative training data based on the modified density data

S12

# Fig. 4

500 A computer program product.

502 A signal bearing medium.

504

At least one of

One or more instructions to receive training data, wherein the training data comprises training inputs and training labels; or

One or more instructions to receive test data, wherein the test data corresponds to a set of points; or

One or more instructions to determine a set of out of sample errors based on the training data and test data;

One or more instructions to determine a set of gradient values based on the set of out of sample errors, wherein the set of gradient values corresponds to the set of points in the test data, each respective gradient value corresponds to a particular point in the test data and relates to a first magnitude and to a second magnitude, where the first magnitude is a first expected value associated with the set of out of sample errors corresponding to the set of points, and the second magnitude is a second expected value associated with a portion of the set of out of sample errors, where the portion corresponds to the set of points and excludes the particular point; or

One or more instructions to transform the set of gradient values into modified density data; or

One or more instructions to generate alternative training data based on the modified density data.

| 506 A computer readable medium | 508 A recordable medium | 510 A communications medium |

Fig. 5

FIG. 6

COMPUTING DEVICE (600)

BASIC CONFIGURATION (602)

**SYSTEM MEMORY (606)**

ROM/RAM

OPERATING SYSTEM (620)

APPLICATION (622)

DENSITY MODIFICATION INSTRUCTIONS (626)

PROGRAM DATA (624)

DENSITY MODIFICATION DATA (628)

**PROCESSOR (604)**

μP/μC / DSP

LEVEL 1 CACHE (610) | LEVEL 2 CACHE (612)

PROCESSOR CORE ALU/FPU/DSP (614)

REGISTERS (616)

MEMORY CONTROLLER (618)

MEMORY BUS (608)

INTERFACE BUS (640)

**OUTPUT DEVICES (642)**

GRAPHICS PROCESSING UNIT (648)

AUDIO PROCESSING UNIT (650)

A/V PORT(S) (652)

**PERIPHERAL INTERFACES (644)**

SERIAL INTERFACE CONTROLLER (654)

PARALLEL INTERFACE CONTROLLER (656)

I/O PORT(S) (658)

**STORAGE DEVICES (632)**

REMOVABLE STORAGE (636) (e.g., CD/DVD)

NON-REMOVABLE STORAGE (638) (e.g., HDD)

BUS/INTERFACE CONTROLLER (630)

**COMMUNICATION DEVICES (646)**

NETWORK CONTROLLER (660)

COMM. PORT(S) (664)

OTHER COMPUTING DEVICE(S) (662)

STORAGE INTERFACE BUS (634)

**Input:** $P_S$, $L(\cdot)$, learning rate $\eta$
Discretize domain $\mathcal{X} \rightarrow \mathcal{X}_D$
Initialize $p(x_n)$ for $x_n \in \mathcal{X}_D$
**repeat**
    **for** all $x_n \in \mathcal{X}_D$ **do**
$$\nabla(\mathcal{L}(p(x_n))) := \left( \mathbb{E}_{\substack{x_i \sim P \\ i \neq n}}[L(x_1, \ldots, x_N)] - \right.$$
$$\left. \mathbb{E}_{\substack{x_i \sim P \\ i=1,\ldots,x_N}}[L(x_1, \ldots, x_N)] \right) p(x_n)$$
$$p(x_n) := p(x_n) - \eta \nabla_\psi(\mathcal{L}(p(x_n)))$$
    **if** $p(x_n) < 0$ **then** $p(x_n) = 0$
    **end for**
    Normalize $p$
**until** $(\nabla(\mathcal{L}(p)) = 0)$

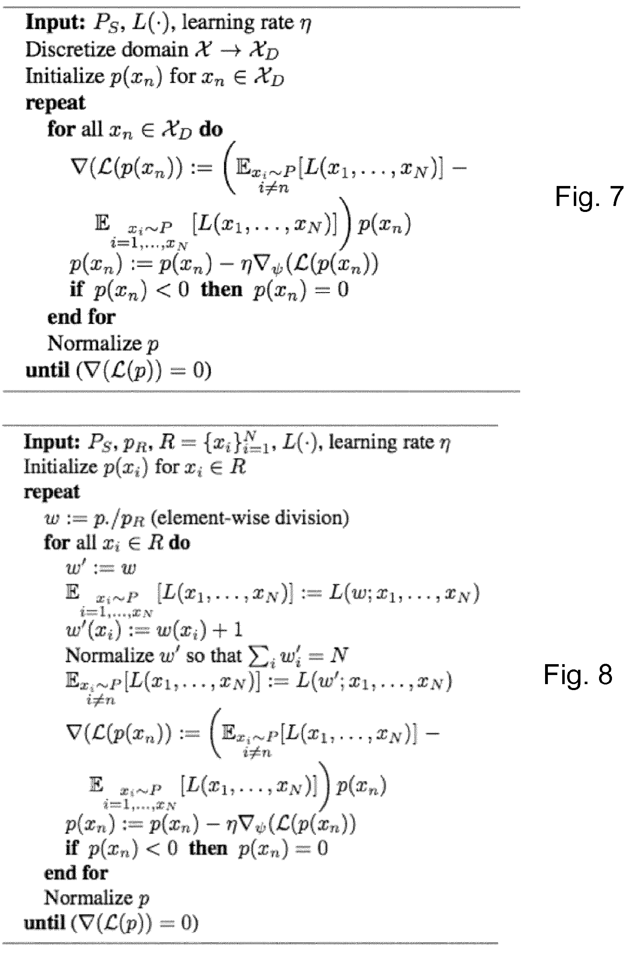

Fig. 7

**Input:** $P_S$, $p_R$, $R = \{x_i\}_{i=1}^N$, $L(\cdot)$, learning rate $\eta$
Initialize $p(x_i)$ for $x_i \in R$
**repeat**
    $w := p./p_R$ (element-wise division)
    **for** all $x_i \in R$ **do**
      $w' := w$
$$\mathbb{E}_{\substack{x_i \sim P \\ i=1,\ldots,x_N}}[L(x_1, \ldots, x_N)] := L(w; x_1, \ldots, x_N)$$
      $w'(x_i) := w(x_i) + 1$
      Normalize $w'$ so that $\sum_i w'_i = N$
$$\mathbb{E}_{\substack{x_i \sim P \\ i \neq n}}[L(x_1, \ldots, x_N)] := L(w'; x_1, \ldots, x_N)$$
$$\nabla(\mathcal{L}(p(x_n))) := \left( \mathbb{E}_{\substack{x_i \sim P \\ i \neq n}}[L(x_1, \ldots, x_N)] - \right.$$
$$\left. \mathbb{E}_{\substack{x_i \sim P \\ i=1,\ldots,x_N}}[L(x_1, \ldots, x_N)] \right) p(x_n)$$
$$p(x_n) := p(x_n) - \eta \nabla_\psi(\mathcal{L}(p(x_n)))$$
    **if** $p(x_n) < 0$ **then** $p(x_n) = 0$
    **end for**
    Normalize $p$
**until** $(\nabla(\mathcal{L}(p)) = 0)$

Fig. 8

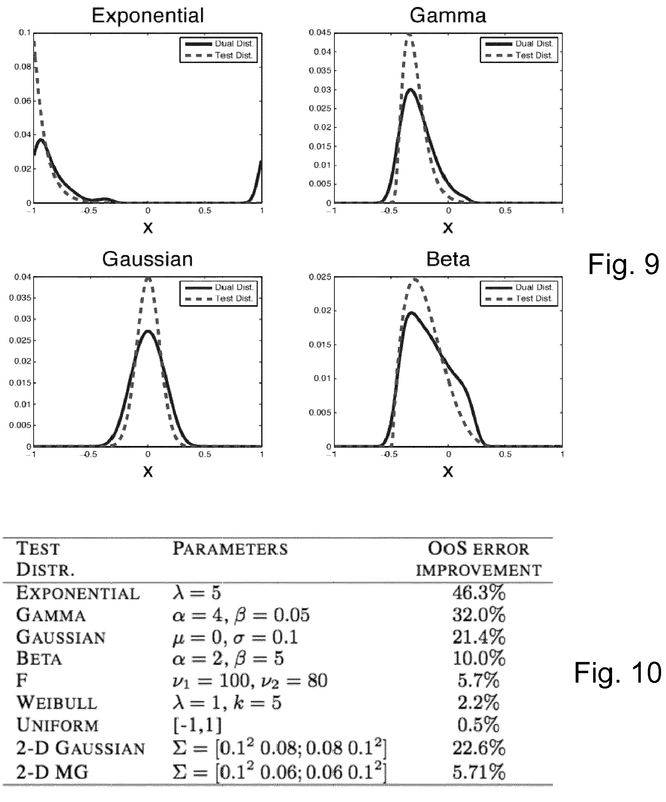

Fig. 9

| Test Distr. | Parameters | OoS error improvement |
|---|---|---|
| Exponential | $\lambda = 5$ | 46.3% |
| Gamma | $\alpha = 4, \beta = 0.05$ | 32.0% |
| Gaussian | $\mu = 0, \sigma = 0.1$ | 21.4% |
| Beta | $\alpha = 2, \beta = 5$ | 10.0% |
| F | $\nu_1 = 100, \nu_2 = 80$ | 5.7% |
| Weibull | $\lambda = 1, k = 5$ | 2.2% |
| Uniform | $[-1,1]$ | 0.5% |
| 2-D Gaussian | $\Sigma = [0.1^2\ 0.08; 0.08\ 0.1^2]$ | 22.6% |
| 2-D MG | $\Sigma = [0.1^2\ 0.06; 0.06\ 0.1^2]$ | 5.71% |

Fig. 10

| DATASET | $N$ | DUAL | NO DUAL |
|---|---|---|---|
| (CLASSIF.) | | 0/1 ERROR | |
| BREAST C. | 278 | **25.70 ± 0.14** | 27.53 ± 0.15 |
| BREAST WI | 683 | **4.38 ± 0.04** | 4.45 ± 0.04 |
| GERMAN CRED. | 768 | **23.96 ± 0.09** | 25.08 ± 0.09 |
| HABERMAN | 306 | **25.56 ± 0.13** | 26.10 ± 0.13 |
| DIABETES | 768 | **24.09 ± 0.09** | 25.08 ± 0.09 |
| IONOSPHERE | 351 | **6.28 ± 0.07** | 6.41 ± 0.07 |
| (REGRESSION) | | NMSE | |
| ABALONE | 4177 | **50.25 ± 0.10** | 50.75 ± 0.10 |
| AILERONS | 13750 | **18.63 ± 0.02** | 18.65 ± 0.02 |
| BANK8FM | 8192 | **6.70 ± 0.01** | 6.72 ± 0.01 |
| BANK32NH | 8192 | 46.84 ± 0.06 | 46.87 ± 0.06 |
| BOS. HOUSING | 606 | 36.74 ± 0.27 | 36.94 ± 0.27 |
| CA HOUSING | 20650 | 36.15 ± 0.04 | 36.19 ± 0.04 |
| CPU-ACT | 8192 | **25.97 ± 0.08** | 26.39 ± 0.08 |
| CPU-SMALL | 8192 | **30.11 ± 0.09** | 30.47 ± 0.09 |
| $\delta$-AILERONS | 9129 | 49.81 ± 0.10 | 49.81 ± 0.10 |
| KIN8NM | 8192 | 58.83 ± 0.05 | 58.83 ± 0.05 |
| PUMA8NH | 8192 | 61.73 ± 0.05 | 61.73 ± 0.05 |

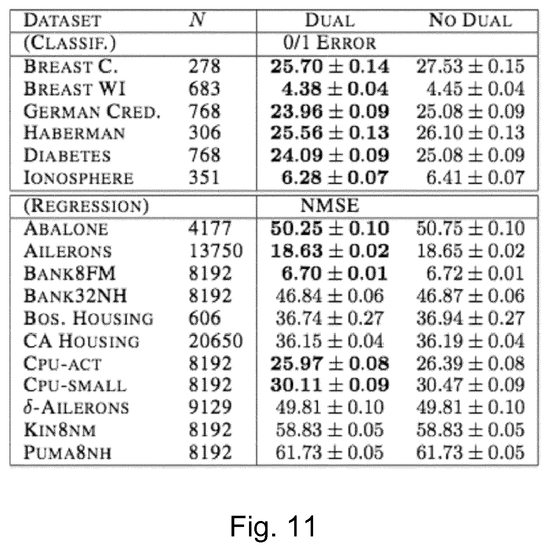

Fig. 11

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Carlos Roberto Gonzalez: "Optimal Data Distributions in Machine Learning", , 22 May 2015 (2015-05-22), pages 1-125, XP055319812, DOI: 10.7907/Z9DR2SD5 Retrieved from the Internet: URL:http://thesis.library.caltech.edu/8888 [retrieved on 2016-11-15] * Pages 1 to 40 from original PhD report; page 1 - page 40 * | 1-14 | INV. G06N7/00 |
| X A | US 2013/254153 A1 (MARCHERET ETIENNE [US]) 26 September 2013 (2013-09-26) * paragraph [0001] - paragraph [0009] * * paragraph [0022] - paragraph [0029] * * paragraph [0066] - paragraph [0066] * * paragraph [0080] - paragraph [0087] * | 1-6, 9-12,14 7,8,13 | |
| X | CARLOS R. GONZÁLEZ ET AL: "Mismatched Training and Test Distributions Can Outperform Matched Ones", NEURAL COMPUTATION, vol. 27, no. 2, 1 February 2015 (2015-02-01), - 1 February 2015 (2015-02-01), pages 365-387, XP055318536, US ISSN: 0899-7667, DOI: 10.1162/NECO_a_00697 * the whole document * | 1-14 | TECHNICAL FIELDS SEARCHED (IPC) G06N G06Q |

-/--

The present search report has been drawn up for all claims

| Place of search | Date of completion of the search | Examiner |
|---|---|---|
| The Hague | 17 November 2016 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 17 2168

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Carlos Roberto González ET AL: "Four Results in Matching Data Distributions", 21 June 2014 (2014-06-21), pages 1-18, XP055318904, Retrieved from the Internet: URL:https://web.archive.org/web/2016032917 2920/https://work.caltech.edu/paper/Gonzal ez-AbuMostafa-Matching.pdf [retrieved on 2016-11-11] | 1-6, 8-11,14 | |
| A | * the whole document * | 7,12,13 | |
| A | R. Tyrrell Rockafellar: "Basic Issues in Lagrangian Optimization" In: "Optimization in Planning and Operation of Electric Power Systems", 1 January 1993 (1993-01-01), Physica-Verlag HD, Heidelberg, XP055318735, ISBN: 978-3-662-12646-2 pages 3-30, DOI: 10.1007/978-3-662-12646-2_1, * the whole document * | 1-14 | |
| A | US 6 876 955 B1 (FLEMING MARK [US] ET AL) 5 April 2005 (2005-04-05) * the whole document * | 1-14 | |

TECHNICAL FIELDS
SEARCHED (IPC)

The present search report has been drawn up for all claims

| Place of search | Date of completion of the search | Examiner |
|---|---|---|
| The Hague | 17 November 2016 | Theissing, Simon |

EPO FORM 1503 03.82 (P04C01)

## ANNEX TO THE EUROPEAN SEARCH REPORT
## ON EUROPEAN PATENT APPLICATION NO.

EP 16 17 2168

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2016

| Patent document cited in search report | | Publication date | Patent family member(s) | | Publication date |
|---|---|---|---|---|---|
| US 2013254153 | A1 | 26-09-2013 | US 2013254153 A1<br>US 2015220853 A1 | | 26-09-2013<br>06-08-2015 |
| US 6876955 | B1 | 05-04-2005 | US 6876955 B1<br>US 7305328 B1 | | 05-04-2005<br>04-12-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 451859 A
- US 451870 A
- US 451899 A
- US 451935 A